# EUROPEAN PATENT APPLICATION

(11) **EP 3 082 036 A1**
(43) Date of publication of application: **19.10.2016**
(21) Application number: 16161167.8
(22) Date of filing: 18.03.2016
(51) Int. Cl.: G06F 9/44

(54) **SYSTEM AND METHOD FOR SOFTWARE REUSE**

(30) Priority: 30.03.2015 IN 1655MA2015
(71) Applicant: Wipro Limited, 560 035 Karnataka (IN)
(72) Inventor: DSOUZA, Melwyn Anthony, 560076 Karnataka (IN); BASIREDDY, Saritha, 560100 Karnataka (IN); CHANNAPRAGADA, Chandra Sekhar, 560008 Karnataka (IN)
(74) Representative: Finnegan Europe LLP

(57) **Abstract**

This disclosure relates generally to Information Technology (IT) and more particularly to a system and a method for software reuse. In one embodiment, the method includes identifying at least one portion of a software code contemporaneous to a user developing a software functionality in the IDE. The at least one portion of the software code corresponds to the software functionality. The method further includes prompting the user to reuse the at least one portion of the software code on the IDE. Thereafter, the method includes restricting the user from performing additional operations on the IDE during subsistence of the prompt. Finally, the method includes enforcing reuse of the at least one portion of the software code in response to obtaining a user approval for the at least one portion.

## Description

### Technical Field

This disclosure relates generally to Information Technology (IT) and more particularly to a system and a method for software reuse.

### Background

Currently, project schedules and deadlines for development and maintenance of software applications are very short and tight. Thus, re-using existing software codes, which have already been developed within the project or in other projects, may help in meeting critical deadlines in order to ensure success of the project.

In conventional systems and methods, to reuse a software code, software developers have to perform manual searches to find relevant software codes. However, the accuracy in identifying relevant software code is variable and is subject to the software developers' competence and/or motivation.

### SUMMARY

In one embodiment, reusing software code in an Integrated Development Environment (IDE) is disclosed. The method includes identifying at least one portion of a software code contemporaneous to a user developing a software functionality in the IDE. The at least one portion of the software code corresponds to the software functionality. The method further includes prompting the user to reuse the at least one portion of the software code on the IDE. Thereafter, the method includes restricting the user from performing additional operations on the IDE during subsistence of the prompt. The method further includes enforcing reuse of the at least one portion of the software code in response to obtaining a user approval for the at least one portion.

In another embodiment, there is provided a method for reusing software code in an Integrated Development Environment (IDE), the method comprising: identifying, via a processor, at least one portion of a software code contemporaneous to a user developing a software functionality in the IDE, wherein the at least one portion of the software code corresponds to the software functionality; prompting, via the processor, the user to reuse the at least one portion of the software code on the IDE; restricting, via the processor, the user from performing additional operations on the IDE during subsistence of the prompt; and enforcing, via the processor, reuse of the at least one portion of the software code in response to obtaining a user approval for the at least one portion.

In another embodiment, system for reusing software code in an IDE is disclosed. The system includes at least one processors and a computer-readable medium storing instructions that, when executed by the at least one processor, cause the at least one processor to perform operations comprising: identifying at least one portion of a software code contemporaneous to a user developing a software functionality in the IDE, wherein the at least one portion of the software code corresponds to the software functionality; prompting the user to reuse the at least one portion of the software code on the IDE; restricting the user from performing additional operations on the IDE during subsistence of the prompt; and enforcing reuse of the at least one portion of the software code in response to obtaining a user approval for the at least one portion.

In yet another embodiment, a non-transitory computer-readable storage medium for reusing software code in IDE is disclosed, when executed by a computing device, cause the computing device to: identify at least one portion of a software code contemporaneous to a user developing a software functionality in the IDE, wherein the at least one portion of the software code corresponds to the software functionality; prompt the user to reuse the at least one portion of the software code on the IDE; restrict the user from performing additional operations on the IDE during subsistence of the prompt; and enforce reuse of the at least one portion of the software code in response to obtaining a user approval for the at least one portion.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a block diagram of an exemplary computer system for implementing various embodiments.
**FIG. 2** illustrates a flowchart of a method for software reuse in an Integrated Development Environment (IDE), in accordance with an embodiment.
**FIG. 3** illustrates a flowchart of a method for software reuse in an IDE, in accordance with another embodiment.
**FIG. 4** is a block diagram illustrating a system for software reuse in an IDE, in accordance with an embodiment.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

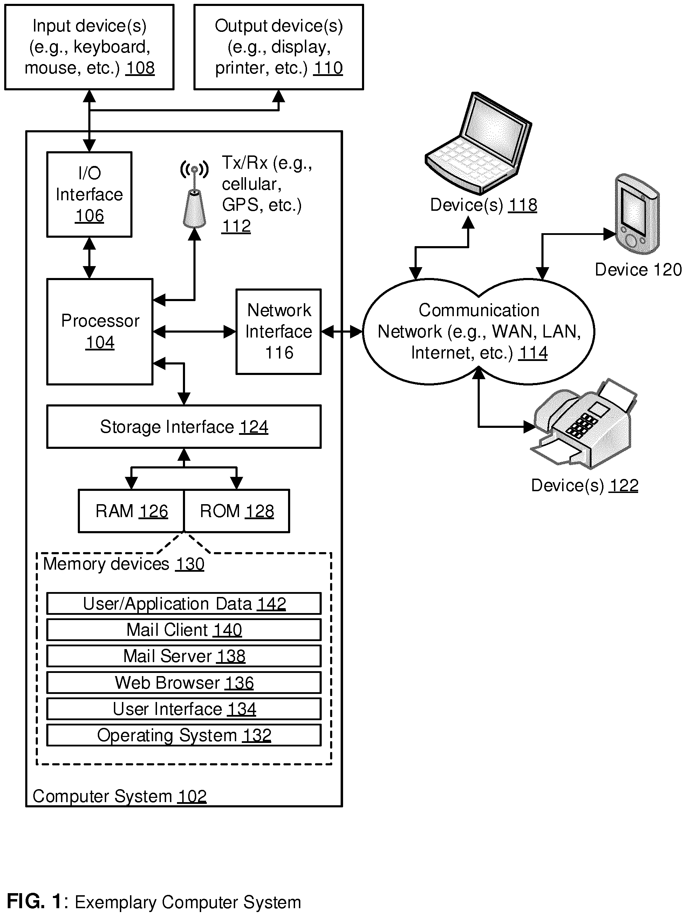

Additional illustrative embodiments are listed below. In one embodiment, a block diagram of an exemplary computer system for implementing various embodiments is disclosed in FIG. 1. Computer system 102 may comprise a central processing unit ("CPU" or "processor") 104. Processor 104 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. Processor 104 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 104 may be disposed in communication with one or more input/output (I/O) devices via an I/O interface 106. I/O interface 106 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 106, computer system 102 may communicate with one or more I/O devices. For example, an input device 108 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 110 may be a printer, fax machine, video display (e.g., cathode ray tube (CRT), liquid crystal display (LCD), light-emitting diode (LED), plasma, or the like), audio speaker, etc. In some embodiments, a transceiver 112 may be disposed in connection with processor 104. Transceiver 112 may facilitate various types of wireless transmission or reception. For example, transceiver 112 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 104 may be disposed in communication with a communication network 114 via a network interface 116. Network interface 116 may communicate with communication network 114. Network interface 116 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. Communication network 114 may include, without limitation, a direct interconnection, local area network (LAN), wide area network (WAN), wireless network (e.g., using Wireless Application Protocol), the Internet, etc. Using network interface 116 and communication network 114, computer system 102 may communicate with devices 118, 120, and 122. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, computer system 102 may itself embody one or more of these devices.

In some embodiments, processor 104 may be disposed in communication with one or more memory devices (e.g., RAM 126, ROM 128, etc.) via a storage interface 124. Storage interface 124 may connect to memory devices 130 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 130 may store a collection of program or database components, including, without limitation, an operating system 132, a user interface application 134, a web browser 136, a mail server 138, a mail client 140, a user/application data 142 (e.g., any data variables or data records discussed in this disclosure), etc. Operating system 132 may facilitate resource management and operation of the computer system 102. Examples of operating system 132 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 134 may facilitate display, execution, interaction, manipulation, or operation of program components through textual or graphical facilities. For example, user interfaces may provide computer interaction interface elements on a display system operatively connected to computer system 102, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 102 may implement web browser 136 stored program component. Web browser 136 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 102 may implement mail server 138 stored program component. Mail server 138 may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, computer system 102 may implement mail client 140 stored program component. Mail client 140 may be a mail viewing application, such as Apple Mail, Microsoft Entourage, Microsoft Outlook, Mozilla Thunderbird, etc.

In some embodiments, computer system 102 may store user/application data 142, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

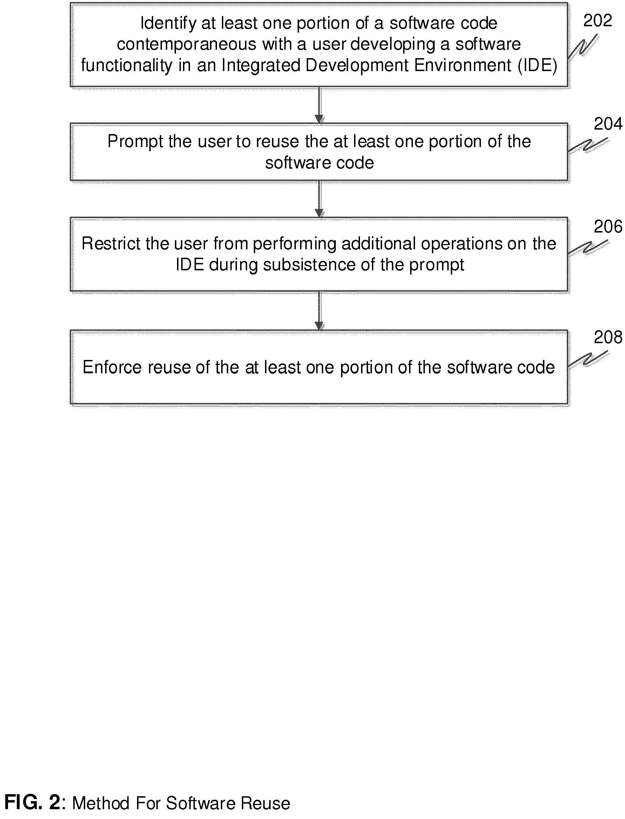

FIG. 2 illustrates a flowchart of a method for software reuse in an IDE, in accordance with an embodiment. Examples of IDE may include, but are not limited to Eclipse™, ActiveState Komodo™, IntelliJ IDEA™, MyEclipse™, Oracle JDeveloper™, NetBeans™, Codenvy™, and Microsoft Visual Studio™. A user may be writing software code on an IDE in order to develop particular software functionality. The user may be a software programmer or a developer. Contemporaneous with the user developing the software functionality, at 202, one or more portions of a software code are automatically identified. The one or more portions of the software code correspond to the software functionality. In other words, when these one or more portions of software code are compiled and executed, it would lead to realization of that software functionality. Thus, the one or more portions of the software code are reusable.

The one or more portions of the software code may be identified by highlighting the one or more portions with a predefined color, for example, red. Alternatively, the text color of the one or more portions may be changed. The one or more portions may also be identified using different fonts, italics, underlining, or blinking.

After identification of the one or more portions, the user, at 204, is prompted to reuse the one or more portions of the software code on the IDE. By way of an example, the user may be prompted using a "warning window" or a notification that reads "Following reusable code have been identified. Please review and incorporate accordingly". Thereafter, at 206, during the subsistence of the prompt, the user is restricted from performing any additional operations on the IDE. In other words, after the user has been prompted, user's access to the IDE is restricted completely, unless some action is taken in response to the prompt. In an embodiment, the IDE may be made read-only. By way of an example, the "warning window" may present the user with two buttons, i.e., an "Ignore Button" and an "Accept Button." In this case, unless the user selects one of the "Ignore Button" or the "Accept Button," the "warning window" would persist and the user would not be allowed to access any functionality of the IDE. By way of another example, the "warning window" may only have an "Accept Button." In this case, the user would have no option but to activate the "Accept Button" in order to access the IDE.

In response to the prompt, the user may respond with a user approval for the one or more portions of the software code. By way of an example, the user approval may be in the form of an activation of the "Accept Button" on the "warning widow." In other words, the user may approve reuse of the one or more portions. Thereafter, at 208, reuse of the one or more portions of the software code is enforced in response to obtaining the user approval.

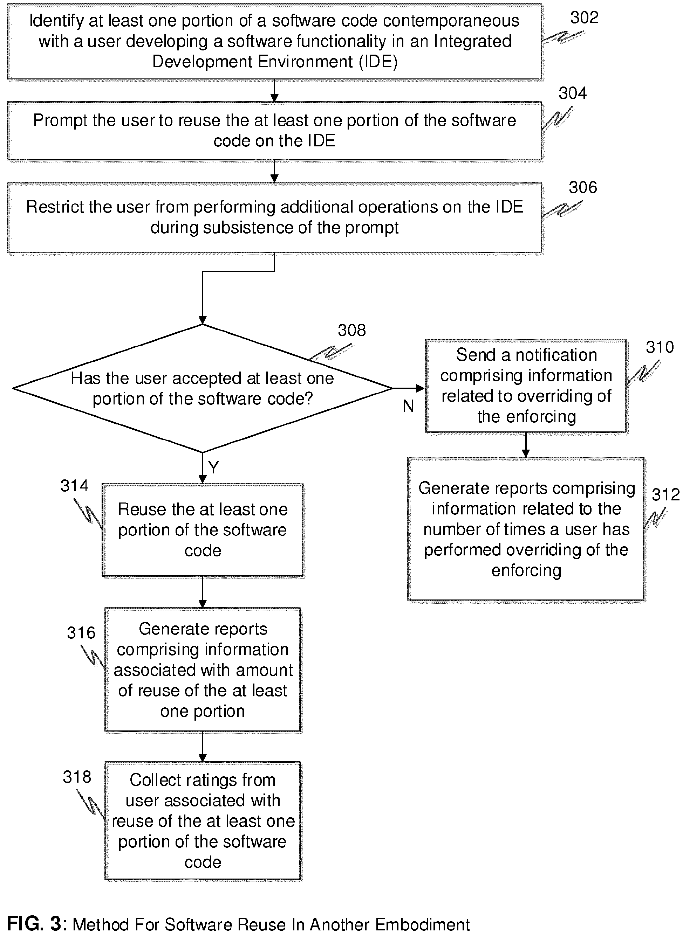

FIG. 3 illustrates a flowchart of a method for software reuse in an Integrated Development Environment (IDE), in accordance with another embodiment. An IDE is preferably used herein to refer to a software application providing facilities to computer programmers and/or computer scientists/engineers to develop software. The IDE preferably includes various functions such as any one or more of a source code editor, a compiler, a debugger, and a graphical user interface (GUI) builder. The IDE preferably also includes a user interface, preferably a GUI, to facilitate the computer programmer and/or computer scientist/engineer to operate these functions. When a user develops a software functionality in the IDE, contemporaneous with the user developing the software functionality, at 302, one or more portions of a software code are automatically identified. Thereafter, the user, at 304, is prompted to reuse the one or more portions of the software code on the IDE. At 306, the user is restricted from performing additional operations on the IDE during subsistence of the prompt. This has been explained in detail in conjunction with FIG. 2.

Thereafter, a check is performed at 308 to determine whether the user has accepted the one or more portions of the software code. In case the user has not accepted the one or more portions, a notification is sent to the supervisor of the user at 310. The notification includes information related to overriding the reuse of the one or more portions of the software code. As a result, the supervisor of the user is promptly informed that the user has overridden the enforcing. Thus, the supervisor is always kept informed in case of any exceptions made by the user. In an embodiment, the notification may also include the reasons of such overriding by the user. In this case, the user while overriding the enforcing may be required to enter the reason for doing the same. At 312, reports may be generated that include information associated with the number of times a particular user has overridden the enforcing. Thus, for every user that uses the IDE for developing any software functionality, such reports might be generated for respective supervisors.

Referring back to 308, if the user has accepted the one or more portions of the software code, the one or more portions of the software code are reused by the user at 314. After the reuse, reports are generated at 316 that include information associated with amount of reuse of the one or more portions of the software code. In other words, the reports would include information related to the number of lines of the software code that have been reused by the user. Finally, at 318, ratings associated with the reuse of the one or more portions of the software code are collected from the user. The user may also be allowed to provide comments related to the reuse. By way of an example, scheduled surveys may be conducted in order to enable the user to provide ratings on a scale of one to ten on various quality parameters for judging a software code. These scheduled surveys are used to maintain good quality software codes in a database, which are then pushed on the IDE for the purpose of reuse.

Therefore, based on the foregoing description, when a user is developing software functionality on an IDE, contemporaneous to it, an intelligent search is automatically performed and relevant software code is identified for reuse. The user is automatically prompted with a list of reusable portions of a software code without the user initiating any search. Moreover, IDE is controlled in order to force the reuse the software code by the developer. In case of the user not reusing the software code, an explicit exception is generated and highlighted to supervisor of the user. As a result, problems like productivity loss and inconsistency in implementation are avoided. Moreover, enforcing the reuse of the existing code ensures timely completion of the project, thereby ensuring overall project success.

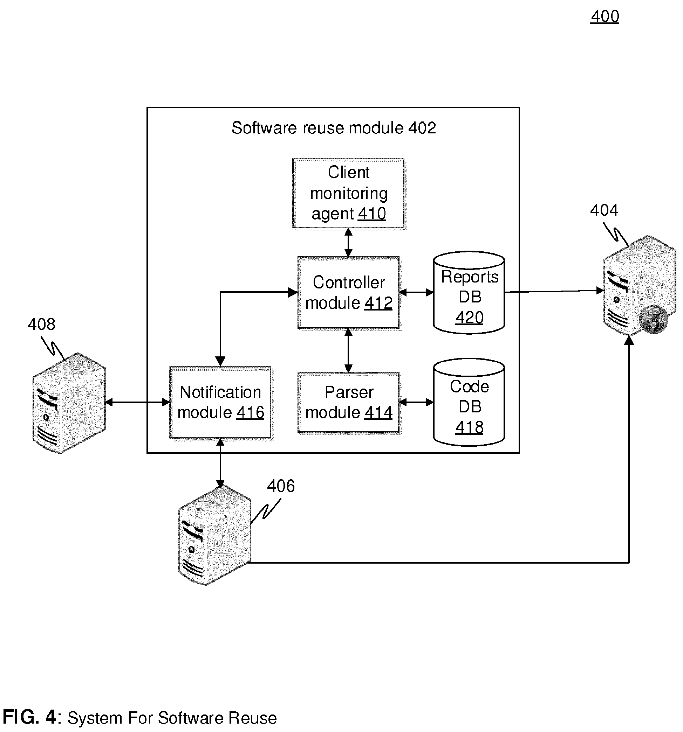

FIG. 4 is a block diagram illustrating a system 400 for software reuse in an Integrated Development Environment (IDE), in accordance with an embodiment. System 400 includes a software reuse module 402 that communicates by way of wired or wireless means with a web server 404, a Lightweight Directory Access Protocol (LDAP) server 406, and an messaging server 408.

Software reuse module 402 further includes a client monitoring agent 410, a controller module 412, a parser module 414, and a notification module 416. Client monitoring agent 410 may reside in a user system, for example, device 118 and device 120. When the user is developing particular software functionality on the IDE, client monitoring agent 410 communicates this information to controller module 412. Based on this information, contemporaneous with the user developing the software functionality, controller module 412 facilitates in identifying one or more portions of a software code that correspond to that software functionality, such that, when these one or more portions of software code are compiled and executed, it would lead to realization of that software functionality.

To this end, controller module 412 communicates with parser module 414 that performs intelligent software code search on a code database 418, which includes a repository of software codes for the purpose of reuse. Based on the search, parser module 414 identifies the one or more portions of the software code that is relevant for the software functionality. Thereafter, parser module 414 communicates the one or more portions of the software code to controller module 412, which further forwards the one or more portions to client monitoring agent 410.

Thereafter, client monitoring agent 410 prompts the user to reuse the one or more portions of the software code on the IDE. Client monitoring agent 410 then restricts the user from performing additional operations on the IDE during subsistence of the prompt and enforces the user to reuse the one or more portions of the software code. The reuse is enforced in response to obtaining a user approval for the same. This has been explained in detail in conjunction with FIG. 2. Client monitoring agent 410 then communicates the information regarding the reuse to controller module 412 that generates reports. These reports include data about the amount of reuse of the one or more portions of the software code and the number of times the user has accepted the enforcing. This has been explained in detail in conjunction with FIG. 3. These reports are then saved in a reports database 420 and are used by management and stakeholders for future retrieval and reviews. In an embodiment, the retrieval and review of these reports are facilitated through a web application (not shown) hosted on web server 404 that has access to reports database 420. When the one or more portions of the software code are reused, client monitoring agent 410 collects ratings from the user. These ratings are associated with the quality of the one or more portions that have been reused. Client monitoring agent 410 communicates these ratings to controller module 412, which may further store these in reports database 420 for future access in order to improve the quality of software codes stored for the purpose of reuse. This has been explained in detail in conjunction with FIG. 3.

In an embodiment, when client monitoring agent 410 enforces the user to reuse the one or more portions, the user may disapprove of this reuse. In this case, client monitoring agent 410 overrides this reuse and communicates the same to controller module 412, which further communicates with notification module 416 to send a notification to a supervisor of the user. To this end, notification module 416 firstly communicates with LDAP server 406 to retrieve details regarding the supervisor of the user. LDAP server 406 includes information regarding supervisors of every user of system 400. Additionally, LDAP server is also used to authenticate the user.

After notification module 416 has authenticated the user and identified the supervisor, notification module 416 communicates with messaging server 408 to send notifications to the supervisor. The notifications include information related to overriding reuse of the one or more portions of the software code. This has been explained in detail in conjunction with FIG. 3. Notifications may be in the form emails sent to the supervisor and/or the user. In this case, messaging server 408 is an email server. Alternatively, notification may be in the form of, but not limited to Short Message Service (SMS) and Multimedia Messaging Service (MMS). In an embodiment, there may be a notifier application running on the system of the supervisor. In this case, the notifier application may display notifications when triggered by messaging server 408.

In an embodiment, when client monitoring agent 410 overrides this reuse and communicates this overriding to controller module 412, controller module 412 generates reports that includes information associated with the number of times a user has overridden the enforcing. This has been explained in detail conjunction with FIG. 3.

Various embodiments of the invention provide system and method for software reuse. When a user is developing software functionality on an IDE, contemporaneous to it, an intelligent search is automatically performed and relevant software code is identified for reuse. The user is automatically prompted with a list of reusable portions of a software code without the user initiating any search. Moreover, IDE is controlled in order to force the reuse the software code by the developer. In case of the user not reusing the software code, an explicit exception is generated and highlighted to supervisor of the user. As a result, problems like productivity loss and inconsistency in implementation are avoided. Moreover, enforcing the reuse of the existing code ensures timely completion of the project, thereby ensuring overall project success.

The specification has described systems and methods for software reuse. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method for reusing software code in an Integrated Development Environment, the method comprising:
identifying at least one portion of a software code contemporaneous to a user developing a software functionality in the Integrated Development Environment, wherein the at least one portion of the software code corresponds to the software functionality;
prompting the user to reuse the at least one portion of the software code on the Integrated Development Environment;
restricting the user from performing additional operations on the Integrated Development Environment during subsistence of the prompt; and
enforcing reuse of the at least one portion of the software code in response to obtaining a user approval for the at least one portion.

2. The method of claim 1 further comprising overriding reuse of the at least one portion of the software code in response to a user disapproval on reusing the at least one portion.

3. The method of claim 2, wherein the overriding reuse further comprises sending a notification to a supervisor of the user, the notification comprising information related to overriding reuse of the at least one portion of the software code.

4. The method of claim 2 or claim 3 further comprising generating reports comprising information associated with amount of reuse of the at least one portion of the software code and the number of times a user has performed at least one of accepting and overriding the enforcing.

5. The method of any preceding claim further comprising collecting ratings from user associated with reuse of the at least one portion of the software code.

6. A system for reusing software code in an Integrated Development Environment, the system comprising:
at least one processor; and
a computer-readable medium storing instructions that, when executed by the at least one processor, cause the at least one processor to perform operations comprising:
identifying at least one portion of a software code contemporaneous to a user developing a software functionality in the Integrated Development Environment, wherein the at least one portion of the software code corresponds to the software functionality;
prompting the user to reuse the at least one portion of the software code on the Integrated Development Environment;
restricting the user from performing additional operations on the Integrated Development Environment during subsistence of the prompt; and
enforcing reuse of the at least one portion of the software code in response to obtaining a user approval for the at least one portion.

7. The system of claim 6, wherein the operations further comprise overriding reuse of the at least one portion of the software code in response to a user disapproval on reusing the at least one portion.

8. The system of claim 7, wherein the operation of overriding reuse further comprises an operation of sending a notification to a supervisor of the user, the notification comprising information related to overriding reuse of the at least one portion of the software code.

9. The system of claim 7 or claim 8, wherein the operations further comprises generating reports comprising information associated with amount of reuse of the at least one portion of the software code and the number of times a user has performed at least one of accepting and overriding the enforcing.

10. The system of any one of claims 6 to 9, wherein the operations further comprise collecting ratings from user associated with reuse of the at least one portion of the software code.

11. A non-transitory computer-readable storage medium for reusing software code in an Integrated Development Environment, when executed by a computing device, cause the computing device to:
identify at least one portion of a software code contemporaneous to a user developing a software functionality in the Integrated Development Environment, wherein the at least one portion of the software code corresponds to the software functionality;
prompt the user to reuse the at least one portion of the software code on the Integrated Development Environment;
restrict the user from performing additional operations on the Integrated Development Environment during subsistence of the prompt; and
enforce reuse of the at least one portion of the software code in response to obtaining a user approval for the at least one portion.

12. The non-transitory computer-readable storage medium of claim 11 further configured to cause the computing device to override reuse of the at least one portion of the software code in response to a user disapproval on reusing the at least one portion.

13. The non-transitory computer-readable storage medium of claim 12 further configured to cause the computing device to send a notification to a supervisor of the user, the notification comprising information related to overriding reuse of the at least one portion of the software code.

14. The non-transitory computer-readable storage medium of claim 12 or claim 13 further configured to cause the computing device to generate reports comprising information associated with amount of reuse of the at least one portion of the software code and the number of times a user has performed at least one of accepting and overriding the enforcing.

15. The non-transitory computer-readable storage medium of any one of claims 11 to 14 further configured to cause the computing device to collect ratings from user associated with reuse of the at least one portion of the software code.
